Europäisches Patentamt

(19) European Patent Office

Office européen des brevets

(11) EP 0 694 362 A1

## (12) EUROPEAN PATENT APPLICATION
published in accordance with Art. 158(3) EPC

(43) Date of publication:
31.01.1996 Bulletin 1996/05

(21) Application number: 94929680.0

(22) Date of filing: 18.10.1994

(51) Int. Cl.[6]: **B23P 17/00**, B24B 1/00

(86) International application number: **PCT/JP94/01751**

(87) International publication number: **WO 95/22430**
(24.08.1995 Gazette 1995/36)

(84) Designated Contracting States:
DE FR GB

(30) Priority: 17.02.1994 JP 43030/94

(71) Applicant: SUMITOMO ELECTRIC INDUSTRIES, LTD.
Osaka-shi, Osaka 541 (JP)

(72) Inventors:
• MURABE, Kaoru
Itami Works of Sumitomo Electric
Hyogo 664 (JP)
• IZUMIDA, Hiromu
Itami Works of Sumitomo Electric
Hyogo 664 (JP)

• NISHIOKA, Takao
Itami Works of Sumitomo Electric
Hyogo 664 (JP)
• YAMAKAWA, Akira
Itami Works of Sumitomo Electric
Hyogo 664 (JP)
• MATSUNUMA, Kenji
Itami Works of Sumitomo Electric
Hyogo 664 (JP)

(74) Representative: Bankes, Stephen Charles Digby et al
London W8 5BU (GB)

## (54) SLIDING PART AND METHOD OF MANUFACTURING THE SAME

(57) A sliding part which is capable of improving the surface roughness of part to be worked by polishing a sliding surface of a metal portion of the part to be worked during the running-in and sliding movement of the sliding part, and therefore capable of reducing the coefficient of friction of the part to be worked and obtain good sliding characteristics thereof even if this part is not subjected to an ultra-precision finishing process, and which has a ceramic portion slidingly moved on the metal portion of the part to be worked, characterized in that the ceramic portion has a grain boundary phase and the sliding surface of the ceramic portion, which has not yet been subjected to running-in and a sliding movement has thereon a brittle layer formed by embrittling the grain boundary phase, which is exposed on the same sliding surface, by a chemical etching or ion impact process, the sliding part being preferably further provided with a complex film, in which solid lubricating particles are dispersed, on the brittle layer-carrying sliding surface thereof.

## Description

TECHNICAL FIELD

The present invention relates to a slide member having a ceramic part that slides in contact with a metallic part of a counter member in the presence of lubricating oil, in particular, to a slide member that works effectively when the counter member has a sliding surface of a complex configuration such as a curved surface, and also relates to a method for fabricating the slide member.

PRIOR ART

Conventionally, many attempts have been made to reduce the friction of slide parts because it is effective to reduce the friction at the slide parts for improvement in the energy efficiency in various types of machines.

It is commonly assumed that, in the presence of lubricants such as lubricating oil, sliding characteristics are affected largely by the minimum clearance or minimum oil film thickness between opposite slide parts, and the properties of the sliding surfaces of the slide parts. As described in "Yuatsu to Kukiatsu (Hydraulic Pressure and Pneumatic Pressure)," Vol. 18, No. 4, 1987, pp. 247 - 258, or in "Proceedings of the Technical Conference 924," 1992, pp. 85 - 88, edited by Automobile Engineers Association, for example, an oil film parameter $\Lambda$ defined by the following equation 1 is frequently used as a value representing the degree of lubrication:

$$\Lambda = h_{min}/\sigma = h_{min}/(R_{rms1}{}^2 + R_{rms2}{}^2)^{1/2} \qquad \text{(Equation 1)}$$

where $h_{min}$ is the minimum clearance or minimum oil film thickness between opposite slide parts, $\sigma$ is the combined surface roughness of the opposite slide parts, $R_{rms1}$ is the mean-square roughness of the surface of one slide part, and $R_{rms2}$ is the mean-square roughness of the surface of the other slide part.

When the value of this oil film parameter $\Lambda$ is 3 or more, it is defined as a fluid lubrication state; when 1 or less, it is defined as a boundary lubrication state; and when between 1 to 3, it is defined as a mixed lubrication state in which the fluid lubrication and boundary lubrication are working together. The larger the value of $\Lambda$ is, the more the contact between the sliding surfaces is relaxed so that the more successful the sliding characteristics are. Accordingly, lessened surface roughness of the two sliding surfaces small are effective for reducing the friction, since the minimum clearance or minimum oil film thickness, $h_{min}$, is constant under the same sliding conditions.

For the reasons above, a high precision ultra-fine finishing process is applied to the sliding surface of the sliding part to make the surface roughness as small as possible. However, for sliding surfaces of curved surfaces or other complex configurations such as in rollers that make rolling contact, the high precision ultra-fine finishing process is difficult to apply. Moreover, it requires a great deal of time and labor, which results in a much expensive processing cost. Therefore, reduction of the friction is currently not satisfactory because the leading technique is the surface finish by conventional grinding processes.

DISCLOSURE OF THE INVENTION

In view of the above-described problems of the prior art, the object of the present invention is to provide a slide member having a ceramic part that can largely be reduced in the friction between the member and the metallic part of its counter member by sliding in the lubricant, and especially to provide a slide member that can be improved in the surface roughness by grinding the sliding surface of the metallic part of the counter member, which is opposed to and slides in contact with the slide member, during a break-in operation or a sliding motion, thus capable of attaining good sliding characteristics by reducing the friction without applying a special, difficult and high-cost ultra-precision finishing process to the counter member.

To attain the above object, the present invention provides a slide member having a ceramic part that slides in contact with a metallic part of the counter member in a lubricant, the slide member being characterized in that the ceramic part of the slide member has a grain boundary phase and that an embrittled layer where the grain boundary phase exposed to the surface is formed on the sliding surface of the ceramic part before a break-in and before a sliding motion.

In the slide member according to the present invention, the whole body or the sliding surface in contact with a counter member is composed of ceramics while the whole body or the sliding surface of the counter member that slides in contact with this slide member is composed of metals. The ceramic part of the slide member may be made from a sintered body of monolithic ceramics or a ceramic composite material reinforced with fibers, whiskers, or the like. However, it is required that the material of the ceramic part contains a vitreous or crystalline grain boundary phase formed with sintering aids and the like.

Examples of the sintered body of monolithic ceramics are oxides such as alumina, zirconia, mullite or spinel; nitrides such as silicon nitride, aluminum nitride or titanium nitride; carbides such as silicon carbide or titanium carbide; borides such as boron nitride or boron carbide; and silisides such as titanium siliside. Examples of the composite material are fiber reinforced composite materials of silicon nitride or crystalline glass reinforced with carbon fibers, silicon carbide fibers or alumina fibers; whisker reinforced composite materials of alumina or silicon nitride reinforced with silicon carbide whiskers and the like; and particle-dispersed reinforced composite materials of silicon nitride or alumina reinforced with titanium nitride particles, silicon carbide nano-particles, and the like.

The embrittled layer refers to a surface layer containing a substantially denatured grain boundary phase portion, which is the result of a process that a grain boundary phase more brittle than the matrix of the ceramics is subjected to corrosion, softening, breakage, or other action by applying a chemical or physical surface embrittling treatment to the exposed surface of the sliding surface of the ceramic part of the slide member that slides in contact with the metallic part of the counter member in a lubricant.

Accordingly, the slide member of the present invention is fabricated by applying a chemical or physical surface embrittling treatment to the grain boundary phase exposed on the ceramic sliding surface of the ceramic member. Examples of effective surface embrittling treatment to form an embrittled layer are an etching treatment with an acidic or alkaline solution, an ion impact treatment, a high speed atomic impact treatment, a thermal etching treatment in vacuum, a laser surface treatment, and a blast processing treatment, where at least one of these treatments is used.

Any acids or alkalies that can selectively etch the grain boundary phase may be used for etching treatments, examples of them being acids such as fluoric acid (HF), sulfuric acid ($H_2SO_4$), nitric acid ($HNO_3$), aqua regia ($H_2SO_4$ + HCl), fluoronitric acid (HF + $HNO_3$) and the like, or alkalies such as sodium hydroxide (NaOH), potassium hydroxide (KOH) and the like. The etching treatment with acidic or alkaline solutions is desirably carried out, specifically, by immersion in an acidic or alkaline solution heated to about 80°C, for example, in an immersion in a hot, concentrated aqueous NaOH solution for a few minutes. Whereas molten alkalies or molten halogenated compounds are also effective, it is preferable in this case that the immersion time is short, for example, 100 seconds or less, since these reagents have strong corrosive effects.

The ion impact treatment is a method in which the grain boundary phase of the ceramic part is etched by irradiation of gaseous ions, where gases that can be easily excited to form plasma, for example noble gases like He, Ne or Ar, active or inert gases like $H_2$, $N_2$, $O_2$ or $CO_2$, or mixed gases like Ar - $H_2$ are used. Actually, it is preferable that the Ar or some other gas as described above is introduced into a chamber at a pressure of about $5 \times 10^{-4}$ torr to generate plasma by electric discharge or the like, and maintained in the resulting plasma with a bias voltage of 500 to 1000 V for about 30 minutes or more.

The high speed atomic impact treatment is a method that Ar or other atoms similar to those used in the ion impact treatment are irradiated to the ceramic part to etch the grain boundary phase, where Ar atoms are preferably irradiated for about 30 minutes, for example, in an about $1 \times 10^{-4}$ torr vacuum chamber.

The thermal etching treatment is a method for etching in which the grain boundary phase of the ceramic part is melted by heating the slide member in a vacuum, where the subject is preferably maintained at a temperature of 1000 to 1500°C for 30 minutes or more, for example, in a vacuum of $10^{-3}$ torr or less.

The laser surface treatment is a method in which the grain boundary phase that is easy to sputter is selectively etched by taking advantage of the difference in sputtering speed by laser irradiation between the sintered body matrix and the grain boundary phase. Examples of the laser media used are $CO_2$ and YAG laser that emit infra-red light, or ArF, KrF and XeCl laser that emit ultraviolet light. For instance, with the use of the excimer laser, it is preferable that laser irradiation of 1 to several hundreds of pulses to any given point of the irradiation part is executed with a heat injection at the focal point of about 1 to 100 $J/cm^2$ and a pulse frequency of 1 to 500 Hz.

Preferably, such laser surface treatment is carried out by using a laser containing the beams of ultraviolet wavelengths. This is because, whereas the processing with the infrared light accompanies a heat generation which causes even the matrix to undergo surface oxidation as well as thermal damage due to rapid heating and rapid cooling, most part of the processing energy with the ultraviolet laser acts on the bonding force of substances to induce a degradative sublimation, so that processing damage to the matrix can be reduced.

In the blast processing treatment, fine particles called shots or grits are injected to damage or destroy the grain boundary phase. The fine particles used are preferably hard abrasive particles such as diamond, boron nitride, or silicon carbide with a mean particle size of 10 μm or less. As for the blasting conditions, the matrix is required to be free from erosion; for example, the injection pressure of the blast articles is preferably 10 atm or so and the processing time is also preferably a few minutes or less.

In the slide member according to the present invention, fine hard particles fall off from the surface of the ceramic part to thereby grind the sliding surface of the metallic part of the counter member, as described below. These fallen particles are generated in large amounts at earlier stages of sliding, abruptly grinding the counter member so that the sliding surface of its metallic part is abraded excessively and thereby roughened.

To prevent this danger, as one aspect of the present invention, there is provided a slide member comprising a composite film in which particles having a solid lubricating effect are dispersed in a polymer, the film being provided on the sliding surface of the ceramic part having an embrittled layer formed thereon by the aforementioned surface embrittling treatment.

Examples of the substances having the solid lubricating effect are graphite, $MoS_2$, BN, $CaF_2$, $Cr_2O_3$, $MoO_3$, $B_2O_3$, and the like, where particles composed of one or more of them are used as dispersed in the polymer. Polyamidimide, polyimide, polytetrafloroethylene, polyphenylenesulfide, diallylphthalate and the like may be used as the polymer with which the composite film is made. Of these, a composite film of polyamidimide having $MoS_2$ is dispersed therein is preferable.

Meanwhile, as the metallic part of the counter member that slides in opposition to the slide member of the present invention, available are regular cast iron, cast iron alloys, cast steel, which are component materials of the sliding part in general machine parts; regular cast iron and casting materials subjected to a surface treatment like chilling; or steel alloys such as bearing steel and high-speed steel, as well as all the metallic materials for sliding use that are currently used in practice such as aluminum alloys, titanium alloys or magnesium alloys. The combination of the metallic material of these counter members and the ceramic material of the slide member is selected depending on the working conditions, required sliding characteristics and durability, or the like.

FUNCTION

In the slide member according to the present invention, since the grain boundary phase exposed on the sliding surface of the ceramic part is embrittled by surface embrittling treatment, minute hard particles of ceramics readily fall off from the surface of the ceramic part during a break-in or a sliding motion in contact with the counter member. As a result, the sliding surface of the metallic part of the counter member is ground by these fallen hard fine particles, whereby the surface roughness is reduced so that the friction between the slide member and counter member can be reduced. Accordingly, the counter member is ground naturally by the sliding motion in contact with the slide member of the present invention and, as a result, reduced in surface roughness, without applying any high-precision, ultra-fine finishing process. Therefore, the slide member of the present invention is effective particularly when applied to the counter member of a complex configuration like a curved face.

When the slide member and the counter member are made to slide in contact with each other for a certain period of time by a break-in or the like, the sliding surface of the ceramic part of the slide member has minute hard particles fallen off therefrom and the embrittled layer abraded, so that the ceramic matrix part having an excellent abrasion resistance is emerged. As a result, after then, the ceramic part is prevented from being further abraded, and therefore the sliding motion can be continued without the ceramic part being abraded and with constant sliding characteristics maintained. The use of ceramics is advantageous in this respect as well as in being capable of preventing seizure or abnormal abrasion in connection with the metallic part of the counter member.

At the time when the ceramic part of the slide member is stopped from progressing in abrasion, the sliding surface of the ceramic part has depressed portions of 0.1 μm or more depths, preferably about 0.1 to 1 μm depths, left as results of the process that the grain boundary phase has been excessively etched or eliminated, or the minute hard particles have fallen off at the time of surface embrittling treatment. Since these depressions serve as oil sumps for lubricants and the like and works as a lubricant supply source, the ability of oil film formation during the sliding motion is improved, contributing to the further reduction of friction, improvement of the sliding characteristics and prevention of the seizure and abnormal abrasion.

As seen above, the ceramic part of the slide member is desired to have superior abrasion resistance and strength at its matrix part. Also, as described above, since the sliding surface of the counter member is ground by the hard particles fallen from the ceramic part, the quality of the ground surface depends largely on the grain size of the fallen hard particles.

As a result of discussing these circumstances, it has been found that the small the size of the crystalline particles of the matrix of the sintered body or composite material constituting the ceramic part of the slide member, the better the result. Reducing the size of the crystalline particles of the matrix allows improvement in the strength and abrasion resistance of the matrix as well as the smoothing of the ground surface of the counter member, where, more specifically, reducing the size of the crystalline particles to 10 μm or less produces remarkable effects. More preferably, if the mean particle size of the crystalline particles is represented by the major axis diameter in the elliptic approximation, that of alumina and silicon carbide is 2 μm or less and that of silicon nitride is 5 μm or less.

The density of the ceramic sintered body or composite material constituting the slide member is preferably 95% or more of that of its theoretical value, and more preferably 98% or more. The reason is that attaining the aforementioned particle size and density allows a further increased strength and a further enhanced abrasion resistance to be obtained, and also allows the sliding surface of the counter member to be reduced in any abrupt grinding and damage by the fallen hard particles.

Meanwhile, since large amounts of minute hard particles fall off from the surface of the ceramic part of the slide member especially at earlier stages of the sliding motion, the sliding surface of the metallic part of the counter member is attacked more vigorously than necessary by these large amounts of fallen hard particles. As a result, the surface roughness may be deteriorated, incurring a danger that desirable sliding characteristics can no longer be obtained. For this danger, it is advantageous that a composite film, in which particles having a solid lubricating effect are dispersed in a polymer, is provided on the sliding surface of the ceramic part on which an embrittled layer is formed by the surface embrittling treatment of the slide member.

In the slide member provided with this composite film, since a large amount of particles having a solid lubricating effect exists between the counter member and sliding surface at earlier stages of the sliding motion, abnormal abrasion due to the fallen hard particles can be reduced by the lubricating effect. Also, the amount of the solid lubricating particles decreases with the continued sliding motion so that the ratio of the presence of the hard particles gradually increases. This makes it possible to attain a normal grinding of the sliding surface of the counter member, so that the abnormal abrasion at the early stage can be avoided. Moreover, the surface roughness of the counter member can be improved even more than the slide member subjected to only a surface embrittling treatment, and therefore the friction can be reduced, so that excellent sliding characteristics can be attained.

The film thickness of the composite film is preferably in the range of 5 to 100 $\mu$m, and more preferably in the range of 10 to 50 $\mu$m. The reason is that a film thickness of the composite film less than 5 $\mu$m would make it impossible to supply the solid lubricating particles in sufficient amount and with stability, out of the effect of reducing any abnormal abrasion of the counter member, while conversely a film thickness over 100 $\mu$m would cause the film to be peeled off at earlier stages of the sliding motion due to poor strength of the film itself, also out of the effect of reducing any abnormal abrasion.

Furthermore, in order to reduce the abnormal abrasion of the counter member with the thickness of the composite film in the range of 5 to 100 $\mu$m, the ratio of the solid lubricating particles dispersed in the composite film needs to be 10% volume or more. Too large a ratio of the solid lubricating particles would result in a decrease in the strength of the composite film itself, which is not preferable for the same reason as discussed for film thicknesses over 100 $\mu$m. Therefore, the amount of the solid lubricating particles in the composite film should be in the range of 10 to 90% by volume, preferably 20 to 80% by volume.

## BRIEF DESCRIPTION OF THE DRAWINGS

The accompanying drawing is a schematic side view of a roller and a chip for illustrating the roller-chip type frictional abrasion test equipment used in embodiments of the present invention.

## BEST MODE FOR CARRYING OUT THE INVENTION

Example 1:

Chips composed of sintered bodies of monolithic ceramics such as alumina ($Al_2O_3$), silicon carbide (SiC), silicon nitride ($Si_3N_4$) or boron nitride (BN), and composite materials such as carbon fiber reinforced $Si_3N_4$, SiC whisker reinforced $Al_2O_3$ or dispersed SiC nano-particles reinforced $Al_2O_3$ were prepared as the slide member of the present invention. The chips were subjected to a surface embrittling treatment with chemical etching, by immersing the sliding surface of each chip in a hot and concentrated aqueous NaOH solution at 80°C for 10 minutes.

All the sintered bodies and composite materials used contained a vitreous grain boundary phase derived from the sintering aid components, and the mean particle size of the crystalline particles constituting the matrix was 10 $\mu$m or less in each case. Chips made from a bearing steel and from a sintered body of silicon nitride (not subjected to a surface embrittling treatment) were prepared as slide members for comparative examples.

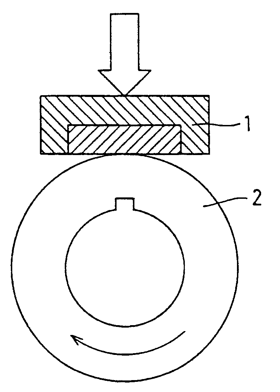

Each slide member obtained was attached as a chip 1 to the roller-chip type frictional abrasion test equipment as shown in Fig. 1. Then, using a roller made of graphite cast iron as a roller 2, which is the counter member, a 20 min. break-in operation was conducted in machine oil under the conditions of a 80°C oil temperature, a 1 m/sec peripheral velocity, and a 30 kgf load. The surface roughness Ra of the sliding surface of the roller 2, which is the counter member, before and after the break-in operation, and the friction coefficient between the chip 1 and the roller 2 after the break-in operation were measured. The results are shown in Table 1.

Table 1

| Sample | Chip material | Surface roughness of roller, Ra (µm) | | Friction coefficient |
|---|---|---|---|---|
| | | Before break-in operation | After break-in operation | |
| 1-1 | Alumina (Al$_2$O$_3$) | 0.46 | 0.26 | 0.082 |
| 1-2 | Silicon carbide (SiC) | 0.52 | 0.29 | 0.077 |
| 1-3 | Silicon nitride(Si$_3$N$_4$) | 0.51 | 0.27 | 0.071 |
| 1-4 | Boron nitride (BN) | 0.47 | 0.29 | 0.075 |
| 1-5 | Carbon fiber reinforced Si$_3$N$_4$ | 0.53 | 0.32 | 0.083 |
| 1-6 | SiC whisker reinforced Al$_2$O$_3$ | 0.49 | 0.32 | 0.076 |
| 1-7 | Al$_2$O$_3$ reinforced with SiC nano-particle dispersion | 0.50 | 0.28 | 0.078 |
| 1-8[*] | Bearing steel | 0.52 | 0.61 | 0.13 |
| 1-9[*] | Silicon nitride (Untreated) | 0.47 | 0.42 | 0.091 |

(Note) The samples denoted by * in the table are Comparative Examples.

As apparent from the results in Table 1, in each sample using the chip-type slide member according to the present invention composed of ceramics whose surface has been subjected to embrittling treatment with etching, the surface roughness of the sliding surface of the roller of graphite cast iron, the counter member, was able to be more reduced during the break-in operation, compared with the case where chips made of ceramics or conventional steel materials not subjected to the embrittling treatment were used. As a consequence, the friction coefficient was able to be improved remarkably.

After the break-in operation, the surface of each chip-type slide member composed of ceramics subjected to embrittling treatment was observed by a scanning electron microscope. As the result, the surface comprised flat portions and about 0.1 to 1 µm deep depressed portions. These depressed portions, it can be considered, serve as an oil sump that allows the oil film formation ability to be improved, so that a remarkable reduction in the friction coefficient was attained from the above improvement as well as the improvement in the surface roughness of the counter member.

Example 2:

Chips composed of sintered bodies of monolithic ceramics such as alumina (Al$_2$O$_3$), zirconia (ZrO$_2$), silicon carbide (SiC) and silicon nitride (Si$_3$N$_4$) (each having a vitreous grain boundary phase derived from sintering aid components) were prepared as the slide member of the present invention. The chips were subjected to a surface embrittling treatment with chemical etching, by immersing the sliding surface of each chip in a hot and concentrated aqueous NaOH solution at 80°C for 10 minutes. Sintered bodies that do not contain any components other than their constituting elements and inevitable impurities and that have no grain boundary phase were also prepared as comparative examples. These were also subjected to the same surface embrittling treatment with chemical etching as in the foregoing case.

Each slide member obtained was attached as a chip 1 to the roller-chip type frictional abrasion test equipment as shown in Fig. 1. Then, using a roller made of casting iron as a roller 2, which is the counter member, a break-in operation (20 minutes) was conducted under the same conditions as in Example 1. The surface roughness Ra of the sliding surface of the roller 2 before and after the break-in operation, and the friction coefficient between the chip 1 and the roller 2 after the break-in operation were measured. The results are shown in Table 2.

Table 2

| Sample | Chip material | Surface roughness of roller Ra (μm) | | Friction coefficient |
|---|---|---|---|---|
| | | Before break-in operation | After break-in operation | |
| 2-1 | Alumina (With grain boundary phase) | 0.46 | 0.26 | 0.082 |
| 2-2 | Zirconia (with grain boundary phase) | 0.48 | 0.27 | 0.083 |
| 2-3 | Silicon carbide (with grain boundary phase) | 0.52 | 0.29 | 0.077 |
| 2-4 | Silicon nitride (with grain boundary phase) | 0.51 | 0.27 | 0.071 |
| 2-5* | Alumina (without grain boundary phase) | 0.51 | 0.47 | 0.095 |
| 2-6* | Zirconia (without grain boundary phase) | 0.48 | 0.42 | 0.098 |
| 2-7* | Silicon carbide (without grain boundary phase) | 0.53 | 0.48 | 0.096 |
| 2-8* | Silicon nitride (without grain boundary phase) | 0.49 | 0.43 | 0.092 |

(Note) The samples denoted by * in the table represent Comparative Examples.

It can be understood from the results in Table 2 that the embrittling treatment according to the present invention is effective for the ceramics having grain boundary phases, exhibiting an effect of reducing the surface roughness of the counter member and thereby reducing their friction coefficient. Meanwhile, it is also found that ceramics without grain boundary phases are out of such effects even with the embrittling treatment.

With respect to the slide members composed of sintered bodies of silicon nitride having grain boundary phases, those having a vitreous grain boundary phase and others having a crystalline grain boundary phase were compared with each other. As a result, the grain boundary phase showed corrosion in both cases after etching with an alkali. Also, there was almost no difference between them in decrease in the surface roughness and reduction in the friction coefficient of the counter member through the break-in operation.

Example 3:

Chip-type slide members composed of sintered bodies of silicon nitride having vitreous grain boundary phases were subjected to a surface embrittling treatment by either one of chemical etching, ion impact, high speed atomic impact, or thermal etching, laser surface treatment, or blast processing treatment under the conditions listed in Table 3 below:

Table 3

| Sample | Embrittling treatment | Treatment conditions |
|---|---|---|
| 3-1 | Chemical etching | Hot, concentrated aq. NaOH solution at 80°C, immersion for 10 min. |
| 3-2 | Chemical etching | Aq. HF solution of 60% by volume, immersion for 5 min. |
| 3-3 | Chemical etching | Hot, concentrated aq. $HNO_3$ solution at 80°C, immersion for 20 min. |
| 3-4 | Chemical etching | Hot, concentrated aq. $H_2SO_4$ solution at 80°C, immersion for 20 min. |
| 3-5 | Ion impact | $Ar^+$, $5 \times 10^{-4}$ torr, incident power 1 kW, bias voltage 500 V, irradiation 30 min. |
| 3-6 | Ion impact | $N_2^+$, $5 \times 10^{-4}$ torr, incident power 1kW, bias voltage 500 V, irradiation 30 min. |
| 3-7 | High speed atomic impact | Ar, $1 \times 10^{-4}$ torr, irradiation 30 min. |
| 3-8 | Thermal etching | $1 \times 10^{-4}$ torr, 1500°C, held for 60 min. |
| 3-9 | Laser processing | ArF excimer laser, heat injection 5 J/cm², pulse frequency 10 Hz, equivalent pulse number 10 pulses |
| 3-10 | Blast processing | Injection pressure 2 atom, injection time 30 sec. |

Each slide member obtained of the present invention was attached as a chip 1 to the roller-chip type frictional abrasion test equipment as shown in Fig. 1. Then, using a roller made of cast iron as a roller 2, which is the counter member, a break-in operation (20 minutes) was conducted under the same conditions as in Example 1. The surface roughness Ra of the sliding surface of the roller 2 before and after the break-in operation, and the friction coefficients between the chip 1 and the roller 2 after the break-in operation were measured. Also, as a comparative example, similar tests were conducted with a slide member which was composed of a sintered body of silicon nitride likewise and which was subjected to none of the surface embrittling treatments. The results of these are shown in Table 4.

Table 4

| Sample | Embrittling treatment | Surface roughness of roller Ra (μm) | | Friction coefficient |
|---|---|---|---|---|
| | | Before break-in operation | After break-in operation | |
| 3-1 | Chemical etching | 0.51 | 0.27 | 0.071 |
| 3-2 | Chemical etching | 0.48 | 0.25 | 0.071 |
| 3-3 | Chemical etching | 0.52 | 0.23 | 0.069 |
| 3-4 | Chemical etching | 0.47 | 0.21 | 0.068 |
| 3-5 | Ion impact | 0.49 | 0.22 | 0.070 |
| 3-6 | Ion impact | 0.53 | 0.26 | 0.072 |
| 3-7 | High speed atomic impact | 0.51 | 0.25 | 0.071 |
| 3-8 | Thermal etching | 0.50 | 0.24 | 0.067 |
| 3-9 | Laser processing | 0.48 | 0.29 | 0.073 |
| 3-10 | Blast processing | 0.45 | 0.33 | 0.080 |
| 3-11* | No embrittling treatment | 0.47 | 0.42 | 0.091 |

(Note) The sample denoted by * represents Comparative Example.

It can be understood from the results in Table 4 that any of the slide members of the invention examples subjected to any of the surface embrittling treatments is superior in the effects of decreasing the surface roughness and reducing the friction coefficient of the counter member, as compared with those not subjected to any of the surface embrittling treatments.

Example 4:

Chip-type sintered bodies of silicon nitride having vitreous grain boundary phases were subjected to a surface embrittling treatment with chemical etching, by immersing them for 10 minutes in a hot, concentrated aqueous NaOH solution at 80°C, as in Example 1. Thereafter, a composite film composed of polyamidimide in which $MoS_2$ particles were dispersed in 50% by volume was formed to a film thickness of 20 μm on the sliding surface of the embrittled slide member of sintered body. In more detail, $MoS_2$ particles with a mean particle size of 5 μm were added to and dispersed with stirring in commercially available polyimide, applied onto the sliding surface of the sintered body, and thereafter heated to 100°C, whereby the film was formed.

The slide member having a composite film was attached as a chip 1 to the roller-chip type frictional abrasion test equipment as shown in Fig. 1. Then, using a roller made of cast iron as a roller 2, which is the counter member, a break-in operation (20 minutes) was conducted under the same conditions as in Example 1. The surface roughness Ra of the sliding surface of the roller 2 before and after the break-in operation was measured. The results are shown in Table 5. Also, for comparisons, similar tests were conducted with slide members which were composed of the same sintered bodies of silicon nitride, and which had not been subjected to any of the surface embrittling treatments as well as with slide members which had been subjected to the same surface embrittling treatment but which were not provided with the composite film. The results are listed in Table 5.

Table 5

| Time (min.) | Surface roughness of roller Ra (μm) | | |
|---|---|---|---|
| | Embrittling treatment | Embrittling treatment + composite film | Untreated |
| 0 | 0.48 | 0.49 | 0.47 |
| 2 | 0.45 | 0.48 | 0.46 |
| 4 | 0.43 | 0.46 | 0.46 |
| 6 | 0.42 | 0.45 | 0.45 |
| 8 | 0.39 | 0.43 | 0.44 |
| 10 | 0.36 | 0.41 | 0.44 |
| 12 | 0.34 | 0.39 | 0.44 |
| 14 | 0.32 | 0.37 | 0.43 |
| 16 | 0.30 | 0.35 | 0.43 |
| 18 | 0.29 | 0.33 | 0.43 |
| 20 | 0.27 | 0.30 | 0.42 |
| 30 | 0.25 | 0.27 | 0.41 |
| 60 | 0.24 | 0.25 | 0.41 |
| 90 | 0.24 | 0.20 | 0.41 |
| 120 | 0.24 | 0.17 | 0.41 |

It can be understood from the results in Table 5 that additionally providing a composite film in which solid lubricating particles are dispersed over the sliding surface of the slide member subjected to a surface embrittling treatment produces an effect of gradually improving the surface roughness of the sliding surface of the metallic part of the counter member, so that an abrupt and aggressive grinding can be prevented at earlier stages of the sliding motion. Consequently, the final surface roughness of the counter member can be more improved compared with the cases where no composite films are applied.

INDUSTRIAL APPLICABILITY

According to the slide member of the present invention, the surface roughness of the sliding surface of the metallic part of the counter member can be naturally improved and oil sumps can be formed on the surface during a break-in operation and a sliding motion with the counter member in a lubricant. Accordingly, the friction can be reduced and therefore excellent sliding characteristics can be obtained. In particular, even when the sliding surface of the counter member is a complicated configuration like a curved surface, the need of difficult, high-cost, precision finishing processes is eliminated in the present invention, to an economical advantage.

## Claims

1.  A slide member having a ceramic part that slides in contact with a metallic part of a counter member in a lubricant, characterized in that the ceramic part of the slide member has a grain boundary phase, and an embrittled layer in which the grain boundary phase exposed on a sliding surface of the ceramic part has been embrittled is formed on the sliding surface of the ceramic part before a break-in operation and a sliding motion.

2.  A slide member according to Claim 1, wherein said ceramic part is composed of a sintered body of monolithic ceramics or a composite material of ceramics reinforced with fibers, whiskers, or dispersed particles.

3.  A slide member according to Claim 1 or 2, wherein crystalline particles constituting a matrix of the ceramic part has a mean particle size of 10 μm or less.

4.  A slide member according to any one of Claims 1 to 3, wherein depressed portions with a depth of 0.1 μm or more are formed on said sliding surface of the ceramic part after a break-in operation or a sliding motion in contact with said counter member.

5.  A slide member according to Claim 1, wherein a composite film in which particles having a solid lubricating effect are dispersed in a polymer is formed on said sliding surface of the ceramic part on which said embrittled layer is formed.

6.  A slide member according to Claim 5, wherein said composite film has a film thickness of 5 to 100 μm.

7.  A method for fabricating a slide member having a ceramic part that slides in contact with a metallic part of a counter member in a lubricant, the method comprising a step of subjecting a grain boundary phase exposed on a sliding surface of the ceramic part of the slide member to a chemical or physical surface embrittling treatment.

8.  A method for fabricating a slide member according to Claim 7, wherein said surface embrittling treatment is at least one selected from a group of an etching treatment with an acid or alkaline solution, an ion impact treatment, a high speed atomic impact treatment, a thermal etching treatment in a vacuum, a laser surface treatment, and a blast processing treatment.

9.  A method for fabricating a slide member according to Claim 7, further comprising a step of forming a composite film in which particles having a solid lubricating effect are dispersed in a polymer, on said sliding surface of the ceramic part subjected to a surface embrittling treatment by a method according to Claim 7.

EP 0 694 362 A1

# INTERNATIONAL SEARCH REPORT

| | International application No. |
|---|---|
| | PCT/JP94/01751 |

**A. CLASSIFICATION OF SUBJECT MATTER**

Int. Cl$^6$  B23P17/00, B24B1/00

According to International Patent Classification (IPC) or to both national classification and IPC

**B. FIELDS SEARCHED**

Minimum documentation searched (classification system followed by classification symbols)

Int. Cl$^5$  B23P17/00, B24B1/00, C23C22/00, B24B15/08

Documentation searched other than minimum documentation to the extent that such documents are included in the fields searched

Jitsuyo Shinan Koho          1927 - 1994
Kokai Jitsuyo Shinan Koho    1971 - 1994

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, A, 3-271378 (Nippon Seiko Co., Ltd.), December 3, 1991 (03. 12. 91), (Family: none) | 1-9 |
| A | JP, A, 4-183903 (Toden Kogyo K.K.), June 30, 1992 (30. 06. 92), (Family: none) | 1-9 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| December 12, 1994 (12. 12. 94) | January 10, 1995 (10. 01. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)

12